# EUROPÄISCHE PATENTSCHRIFT

(11) **EP 3 830 495 B1**
(45) Veröffentlichungstag und Bekanntmachung des Hinweises auf die Patenterteilung: **29.05.2024**
(21) Anmeldenummer: 19762704.5
(22) Anmeldetag: 23.07.2019
(51) Int. Cl.: F24S 20/20, F24S 40/55, F24S 80/20, F24S 80/60

(54) **VERFAHREN ZUR ISOLATION EINER PROZESSEINHEIT UND PROZESSEINHEIT MIT EINEM ISOLIERENDEN BEREICH**
METHOD FOR INSULATING A PROCESS UNIT AND PROCESS UNIT HAVING AN INSULATING REGION
PROCÉDÉ D'ISOLATION D'UNE UNITÉ DE TRAITEMENT ET UNITÉ DE TRAITEMENT DOTÉE D'UNE ZONE D'ISOLATION

(30) Priorität: 27.07.2018 CH 9322018
(43) Veröffentlichungstag der Anmeldung: 09.06.2021
(73) Patentinhaber: Synhelion SA, 6900 Lugano (CH); ENI S.p.A., 00144 Roma (IT)
(72) Erfinder: AMBROSETTI, Gianluca, 6925 Gentilino (CH); GOOD, Philipp, 8006 Zürich (CH)
(74) Vertreter: Stump, Beat
(86) Internationale Anmeldenummer: PCT/CH2019/050014
(87) Internationale Veröffentlichungsnummer: WO 2020/019087

(56) Entgegenhaltungen:
- EP-A1- 1 394 103
- WO-A1-2015/089273
- CH-A5- 679 330
- DE-A1- 19 713 598
- DE-A1-102011 004 280
- GB-A- 964 819
- US-A- 4 164 123
- US-A1- 2006 174 866
- US-A1- 2014 075 940
- US-A1- 2014 287 375

## Beschreibung

Die vorliegende Erfindung betrifft ein Verfahren nach dem Oberbegriff von Anspruch 1 und eine Prozesseinheit nach dem Oberbegriff von Anspruch 8.

Die Isolierung von Prozesseinheiten, insbesondere solchen, in denen hohe Temperaturen herrschen, ist oft mit komplexen Fragen verbunden. Beispielsweise bei solaren Receivern - im Folgenden "Receiver" genannt ist eine befriedigende Isolation auch darum schwierig zu erreichen, weil eine befriedigende Isolation in der Regel eine grosse Masse mit einer entsprechend grossen thermischen Trägheit aufweist, was dazu führt, dass zwar im Betrieb des Receivers wenig Wärme verloren geht, dafür aber die in der Isolation gespeicherte Wärmemenge während den unvermeidlichen Betriebsunterbrüchen (Nacht, schlechtes Wetter etc.) verloren geht und bei der Wiederaufnahme des Betriebs wieder neu von der Isolation aufgenommen wird. Damit wird der Gesamtwirkungsgrad des Receivers trotz guter Isolation spürbar vermindert.

Hier wäre beispielsweise eine aus hintereinander gestaffelten, strahlungsabschirmenden Folien bestehende

Isolation im Hinblick auf die Wärmeverluste und die thermische Trägheit an sich eine sehr gute Lösung, die jedoch für eine industrielle Produktion zu teuer ist und darüber hinaus bei einer komplizierteren Formgebung des zu isolierenden Bereichs wiederum schwierig zu konstruieren ist.

Ein weiteres Problem besteht darin, dass häufig für hohe Betriebstemperaturen, wie z.B. über 1000 ⁰C, geeignete Hochtemperaturisolationsmaterialien gegenüber solchen mit tieferer Betriebstemperatur einen höheren Wärmeleitkoeffizienten λ aufweisen - d.h. dass Hochtemperaturisolationsmaterialien gegenüber den bei niedrigeren Temperaturen verwendbaren Hochleistungsisolationsmaterialien vergleichsweise schlecht isolieren. Im Stand der Technik ist es bekannt, Hochtemperaturisolationsmaterialien mit Hochleistungsisolationsmaterialien zu kombinieren. Dann wird in Richtung des Wärmestroms Q̇ zuerst das Hochtemperaturisolationsmaterial angeordnet (das den höheren Wärmeleitkoeffizienten λ aufweist) und danach, gegen die kalte Seite der Isolation hin, das Hochleistungsisolationsmaterial mit dem tieferen Wärmeleitkoeffizienten λ.

Der im Betrieb sich in Richtung des Wärmestroms Q̇ einstellende Temperaturabfall in der Isolation führt dazu, dass nach einer gewissen Dicke die Temperatur im Hochtemperaturisolationsmaterial auf ein Niveau gesunken ist, das mit dem Hochleistungsisolationsmaterial verträglich ist, so dass an dieser Stelle dieses besser isolierende Material angeordnet werden kann.

Solch eine Anordnung besitzt jedoch den Nachteil, dass bei ungeeigneter Dimensionierung im laufenden Betrieb der Temperaturabfall im Hochtemperaturisolationsmaterial abnimmt, d.h. die Temperatur am Übergang zum Hochleistungsisolationsmaterial zunimmt und über dessen Betriebstemperatur ansteigt. Dies führt dazu, dass bei richtiger Dimensionierung das Hochleistungsisolationsmaterial nur beschränkt eingesetzt werden kann, so dass dann das nach wie vor eine grosse Masse von Isolationsmaterialien mit entsprechend grosser und unerwünschter thermischer Trägheit vorliegt.

Die oben geschilderten Probleme bestehen nicht nur bei Receivern, sondern bei allen möglichen zu isolierenden Prozesseinheiten im Gebiet der Technik.

Das Dokument US 2006/174866 A1 offenbart ein Verfahren gemäß dem Oberbegriff der Ansprüche 1 und 8.

Entsprechend ist es die Aufgabe der vorliegenden Erfindung, eine Isolation für eine Prozesseinheit mit verminderter thermischer Trägheit zu schaffen.

Dazu weist ein erfindungsgemässes Verfahren die kennzeichnenden Merkmale von Anspruch 1 auf und eine erfindungsgemäss isolierte Prozesseinheit die kennzeichnenden Merkmale von Anspruch 8.

Dadurch, dass der isolierende Bereich gekühlt wird, lässt sich die Gefahr der Überhitzung des temperaturempfindlichen Hochleistungsisolationsmaterials vermeiden, so dass dieses auf Kosten des Hochtemperaturisolationsmaterials erheblich grösser dimensioniert werden kann, mit der Folge, dass die Gesamtmasse der Isolation entsprechend kleiner ausfällt, was wiederum zu der gewünschten reduzierten thermischen Trägheit führt. Durch die Verwendung der aus der Kühlung anfallenden Wärme in einem Verbraucher wird erreicht, dass sich der Wirkungsgrad der Prozesseinheit nicht vermindert.

Bevorzugte Ausführungsformen weisen die Merkmale der abhängigen Ansprüche auf.

Nachstehend wird die Erfindung anhand der Figuren näher erläutert.

Es zeigt:
- Fig. 1a: schematisch ein Solar-Turmkraftwerk nach dem Stand der Technik,
- Fig. 1b: einen Querschnitt durch einen nach dem Stand der Technik isolierten zylindrischen Abschnitt einer Prozesseinheit, hier eines Modells für einen Receiver des Solar-Turmkraftwerks nach Figur 1a
- Fig. 1c: ein Diagramm mit den Wärmeverlusten des zylindrischen Abschnitts nach Figur 1b,
- Fig. 1d: ein Diagramm mit der thermischen Trägheit des zylindrischen Abschnitts nach Figur 1b,
- Fig. 2a: einen Querschnitt durch einen erfindungsgemäss isolierten zylindrischen Abschnitt gemäss Figur 1a,
- Fig. 2b: ein Diagramm der thermischen Verhältnisse des zylindrischen Abschnitts nach Figur 2a,
- Fig. 2c: ein Diagramm mit der thermischen Trägheit des zylindrischen Abschnitts nach Figur 2a, und
- Figur 3: schematisch einen für die Rückführung des erwärmten Kühlmittels ausgebildeten Receivers.

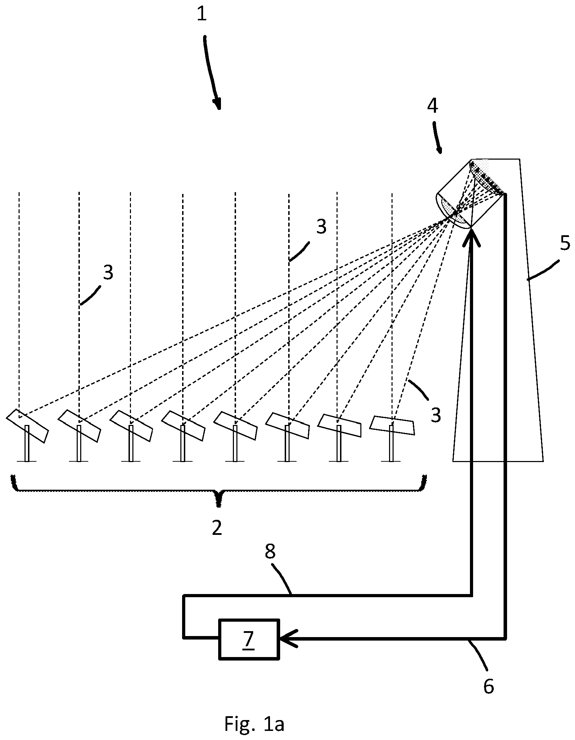

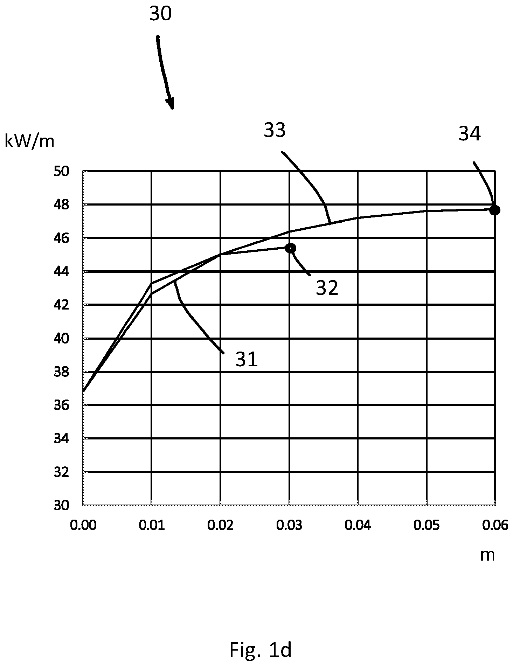

Figur 1a zeigt schematisch ein Solar-Turmkraftwerk 1, mit einem Feld von Heliostaten 2, die auf bekannte Weise Strahlen 3 der Sonne konzentriert auf einen erfindungsgemässen Receiver 4 lenken, der seinerseits auf einem Turm 5 angeordnet ist.

Durch den Receiver 4 kann ein Wärme transportierendes Fluid erwärmt werden, wobei dann diese (solare) Wärme industriell verwertet werden kann, z.B. zur Dampferzeugung in einer Turbine oder für industrielle Prozesse, die Wärme benötigen. Ebenfalls ist möglich, den Receiver 4 als Receiver-Reaktor zur Erzeugung von beispielsweise Syngas auszubilden.

Die im Receiver oder Receiver-Reaktor 4 anfallende, jedoch im Fall des Receiver-Reaktors für die in ihm ablaufende chemische Reaktion aktuell nicht verwertbare oder nicht benötigte Wärme kann über erwärmtes, Wärme transportierendes Fluid mit einer (höheren) Temperatur Tₒ über eine Leitung 6 zu einem Verbraucher 7 geführt werden, wo es sich abkühlt und dann über eine Leitung 8 mit einer (tieferen) Temperatur Tᵢₙ im Kreislauf wieder zum Receiver bzw. Receiver-Reaktor 4 zurückgeführt wird.

In Solar-Turmkraftwerken werden im Wesentlichen räumlich ausgebildete Receiver eingesetzt, die für hohe Temperaturen geeignet sind, wie sie beispielsweise bei einer Konzentration von 500 Sonnen, 1000 Sonnen oder mehr erreicht werden. Solche Temperaturen liegen in der Regel über 800 K, und können in naher Zukunft den Bereich 1000 K, 1500 K oder mehr erreichen, wobei erwartet wird, dass sehr bald Temperaturen von 1800 K oder 2000 K beispielsweise in der Syngasherstellung nicht nur erreicht, sondern auch überschritten werden.

Der Natur der Sache nach stellen Solarkraftwerke in der Nacht, oder bei schlechtem Wetter, den Betrieb ein, mit der Folge, dass der an sich gut isolierte Receiver samt seiner Isolation auskühlt. Entsprechend muss bei der Aufnahme des Betriebs nicht nur der Receiver, sondern auch die Isolation zuerst auf Betriebstemperatur gebracht werden, was wegen der thermischen Trägheit der beträchtlichen Masse der Isolation unerwünscht Zeit und solare Energie kostet und den Wirkungsgrad des Receivers bezogen auf die Betriebszeit erheblich senken kann.

Wie oben erwähnt ist jedoch die vorliegende Erfindung, obschon für Receiver in Solarkraftwerken besonders geeignet, überall dort in der Verfahrenstechnik einsetzbar, wo eine Isolation benötigt wird und beispielsweise eine geringe thermische Trägheit wünschenswert ist.

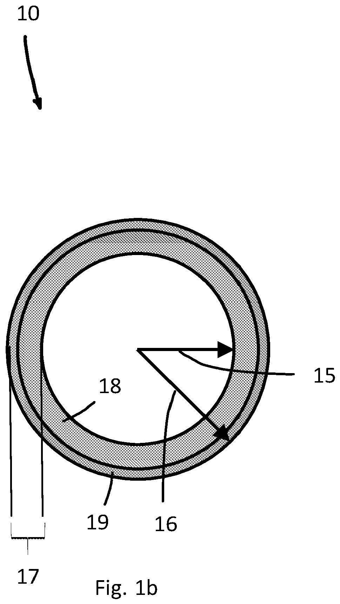

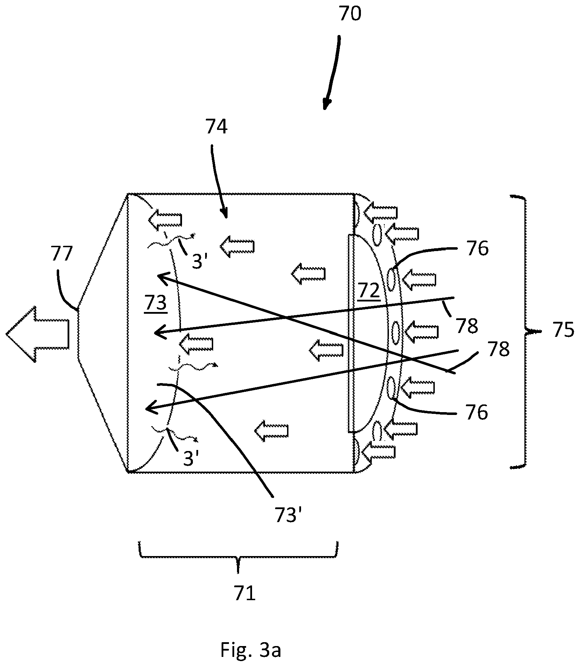

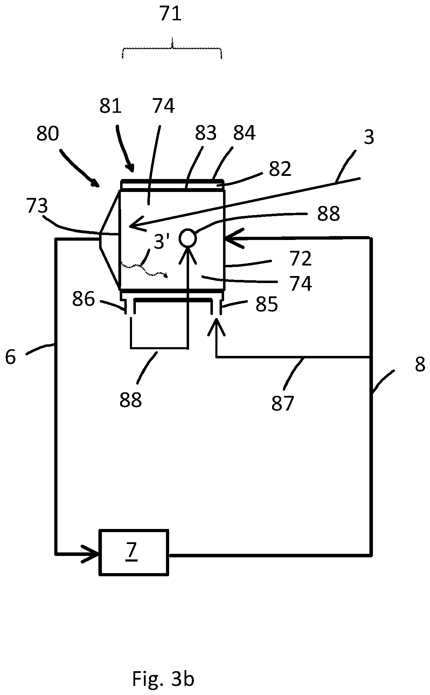

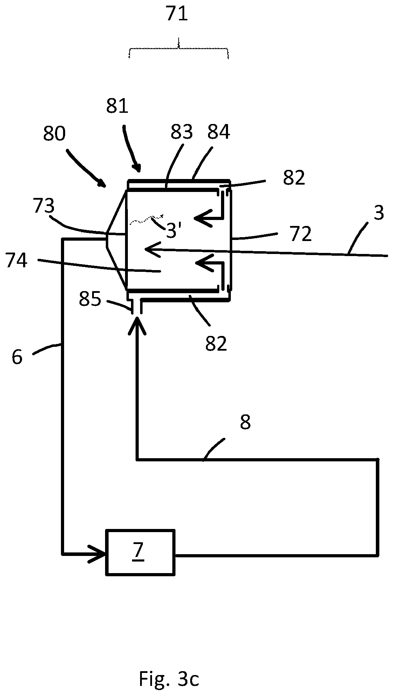

Figur 1b zeigt einen Querschnitt durch ein Modell 10 für einen Receiver 4 des Solar-Turmkraftwerks 1 nach Figur 1a. Dabei ist ein absorptiver Receiver als konstruktiv einfache Ausführungsform angenommen, s. dazu die Beschreibung zu Figur 3. Das Modell 10 betrifft einen Abschnitt 11 des Receivers 4, d.h. einen Abschnitt seiner zylindrischen Wand XX des Absorptionsraums 74 (s. Figur 3a).

Die thermischen Verhältnisse entsprechen einer Isolation gemäss dem Stand der Technik und wurden durch Lösen der stationären, eindimensionalen Wärmeleitungsgleichung in radialer Richtung berechnet. Es sei angemerkt, dass der Isolierte Abschnitt eines Receivers auch als Modell für beispielsweise eine isolierte Rohrleitung verstanden werden kann.

Der Innenradius 15 der Zone mit der (hohen) Betriebstemperatur (hier 1800 K) beträgt 400 mm, der Aussenradius 16 des isolierten Bereichs 550 mm, damit die Dicke des isolierenden Bereichs 17 150 mm, wobei dieser zwei Schichten aufweist, nämlich eine innere Schicht 18 aus einem Hochtemperaturisolationsmaterial und eine äussere Schicht 19 aus einem Hochleistungsisolationsmaterial, das jedoch für hohe Temperaturen nicht geeignet ist:
Generell ist es so, dass Isolationsmaterialien für hohe Temperaturen, hier über 1000 °C bis 1200 °C, einen höheren Wärmeleitkoeffizienten λ aufweisen als die Isolationsmaterialien für tiefere Temperaturen, damit grundsätzlich schlechter isolieren als diese. Typisch sind für ein Hochtemperaturisolationsmaterial für den Einsatz bei über 1000 °C ein Wärmeleitkoeffizient von ca. 0.2 W/(m K) sowie eine Dichte von ca. 450 Kg/m³), während ein typisches Hochleistungsisolationsmaterial ein Wärmeleitkoeffizient von ca. 0.03 W/(m K) und eine Dichte von ca. 250 Kg/m³) aufweisen mag, aber nur bis in den Bereich von 1000 °C oder 1200 °C einsetzbar ist.

Entsprechend wird bei hohen Betriebstemperaturen notwendigerweise für die innere Schicht 18 ein Hochtemperaturisolationsmaterial, z.B. Yttria stabilisiertes Zirconium (so etwa unter der Marke "Zircar ZYFB-3" bekannt) und für die äussere Schicht ein Hochleistungsisolationsmaterial wie mikroporöse Silica (so etwa unter der Marke "Microtherm 1000R" bekannt) oder Alumina (so etwa unter der Marke "Microtherm 1200" bekannt) verwendet. Die Dicke der Schicht 18 aus Hochtemperaturisolationsmaterial hängt dabei vom Temperaturabfall über ihre Dicke ab: sobald die Temperatur auf unter 1000 °C bis 1200 °C gefallen ist, kann die Schicht 19 aus Hochleistungsisolationsmaterial angeschlossen werden. Allerdings ist es so, dass das Hochleistungsisolationsmaterial seine Anwendbarkeit selbst begrenzt: dadurch, dass ein im Vergleich zum Hochtemperaturisolationsmaterial ein geringerer Wärmestrom (im Sinn der besseren Isolation) durch das Hochleistungsisolationsmaterial fliesst, kann die Schicht 19 nur so dick vorgesehen werden, dass kein Wärmestau entsteht, welcher den Temperaturabfall in der Schicht 18 verringert und so im längeren Betrieb durch den entsprechenden Temperaturanstieg das Hochleistungsisolationsmaterial beschädigen würde. Die so sich ergebende notwendige Dicke der Schicht 18 aus Hochtemperaturisolationsmaterial erhöht die thermische Trägheit unerwünscht in beträchtlichem Mass.

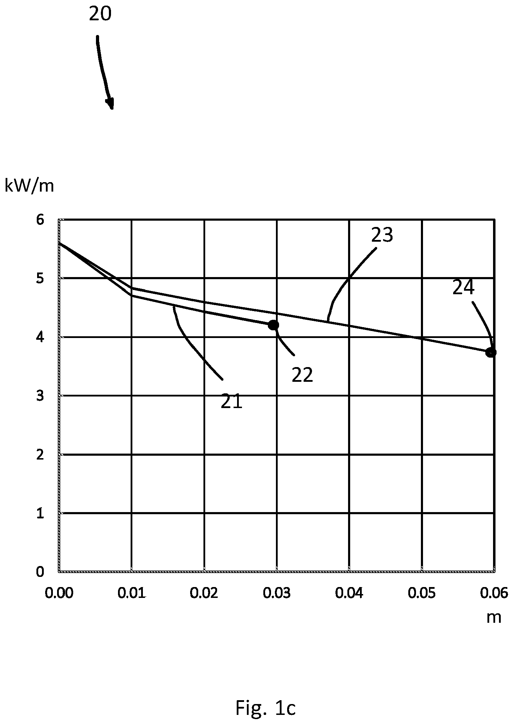

Figur 1c zeigt ein Diagramm 20, dessen vertikale Achse den Wärmestrom durch den isolierenden Bereich 17 (Dicke 150 mm) des Modells 10 (Figur 1b) und dessen horizontale Achse die Dicke der Schicht 19 Microtherm 1000R oder Microtherm 1200 zeigt, unter der Voraussetzung, dass die Schicht 18 aus Zircar ZYFB-3 besteht.

Aus der Kurve 21 für Microtherm 1000R ist ersichtlich, dass ein Wärmeverlust von unter 5,5 kW/m, hier 5,5 kW pro m Höhe des Modells 10 (Figur 1b) erreichbar ist, jedoch nicht weniger als ca. 4,2 kW/m, da die Kurve im Punkt 22 abbricht, weil die Betriebstemperatur des Microtherm 1000R bei weiter vergrösserter Schichtdicke sonst überschritten würde. Die Dicke der Schicht 19 im Fall von Microtherm 1000R kann also nicht grösser bemessen werden als 30 mm, so dass 120 mm für die Dicke der Schicht 18 aus Zircar ZYFB-3 verbleiben.

Aus der Kurve 23 für Microtherm 1200 ist ersichtlich, dass ebenfalls ein Wärmeverlust von unter 5,5 kW/m, hier 5,5 kW pro m Höhe des Modells 10 (Figur 1b) erreichbar ist, jedoch nicht weniger als ca. 3,8 kW/m, da die Kurve im Punkt 24 abbricht, weil die Betriebstemperatur des Microtherm 1200 bei weiter vergrösserter Schichtdicke sonst überschritten würde. Die Dicke der Schicht 19 im Fall von Microtherm 1200 kann also nicht grösser bemessen werden als 60 mm. Im Minimum verbleibt also eine Dicke der massereicheren Schicht 18 aus Zircar ZYFB-3 von 90 mm, was zur unerwünschten thermischen Trägheit beiträgt.

Figur Id zeigt ein Diagramm 30, dessen vertikale Achse die thermische Trägheit in kWh/m, hier pro m Höhe des Modells 10 (Figur 1b) zeigt, d.h. die notwendige Energie, also Wärmemenge, um die Isolationsschicht 17 (Figur 1b) aus Zircar ZYFB-3 mit entweder Microtherm 1000R oder Microtherm 1200 von der Umgebungstemperatur (hier 300 K) auf Betriebstemperatur zu bringen. Betriebstemperatur bedeutet hier, dass die Innenwand der Hochtemperaturisolationsschicht 18 aus Zircar ZYFB-3 bei 1800 K liegt und die Aussenwand des Hochleistungsisolationsmaterials der Schicht 19 von Luft bei Umgebungstemperatur, also 300 K, umgeben ist.

Die horizontale Achse zeigt die Dicke der aus dem Hochleistungsisolationsmaterial bestehenden Schicht 19, hier wie erwähnt entweder Microtherm 1000R oder Microtherm 1200.

Die Kurve 31 zeigt die thermische Trägheit für Microtherm 1000R und bricht wiederum notwendigerweise im Punkt 32 bei einer Schichtdicke von 30 mm ab. Die Kurve 33 zeigt die thermische Trägheit für Microtherm 1000R und bricht wiederum notwendigerweise im Punkt 34 bei einer Schichtdicke von 60 mm ab. Es sei bemerkt, dass die thermische Trägheit mit zunehmender Schichtdicke der Hochleistungsisolation zunächst zunimmt, weil durch die bessere Wärmedämmung die Betriebstemperatur in der dichten Schicht der Hochtemperaturisolation ansteigt. Erst bei weiter zunehmender Schichtdicke der Hochleistungsisolation würde die Trägheit wieder fallen, was aufgrund derer maximalen Betriebstemperatur aber nicht zulässig ist.

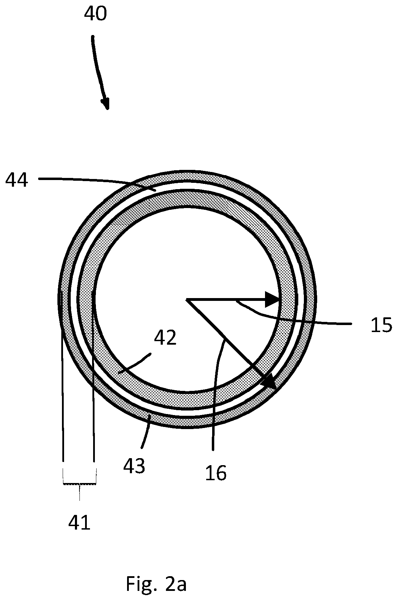

Figur 2a zeigt schematisch einen Querschnitt durch einen erfindungsgemäss isolierten zylindrischen Abschnitt 40 mit den Dimensionen und der Betriebstemperatur des Abschnitts 10 von Figur 1b. Ersichtlich ist der isolierende Bereich 41, der eine innere Schicht 42 aus einem Hochtemperaturisolationsmaterial und eine äussere Schicht aus einem Hochleistungsisolationsmaterial aufweist, wobei bei der gezeigten Ausführungsform die Schichten wiederum aus Zircar ZYFB-3 bzw. Microtherm 1000R bestehen.

Zwischen den Schichten 41,42 befindet sich ein Kühlkanal 44, in welchem im Betrieb des Receivers ein Kühlmedium zirkuliert, das von der inneren isolierenden Schicht 42 erwärmt wird, wobei der Kühlkanal 44 durch die äussere Schicht 43 seinerseits gegenüber der Umgebung isoliert ist. Der Kühlkanal 44, das Kühlmedium und dessen Betriebsparameter wie Strömungsgeschwindigkeit etc. werden dann derart ausgelegt bzw. ausgewählt, dass im Betrieb des Receivers 4 (Figur 1a) die äussere isolierende Schicht 43 nicht über ihre Betriebstemperatur hinaus erwärmt wird, im Fall von Microtherm 1000R 1000 °C Der Fachmann kann im konkreten Fall die geeigneten Materialien und Betriebsparameter bestimmen.

Das so erwärmte Kühlmedium kann dann zu einem Verbraucher geführt werden, wo es seine Wärme wieder abgibt, so dass die aus dem isolierenden Bereich 41 stammende Wärme genutzt wird, was wiederum den Wirkungsgrad des Receivers 4 bzw. der jeweiligen Prozesseinheit entsprechend erhöht.

Dadurch kann je nach dem konkreten Fall die äussere Schicht 43 vergrössert und/oder die innere Schicht 41 verkleinert werden, was die thermische Trägheit der Isolation verringert.

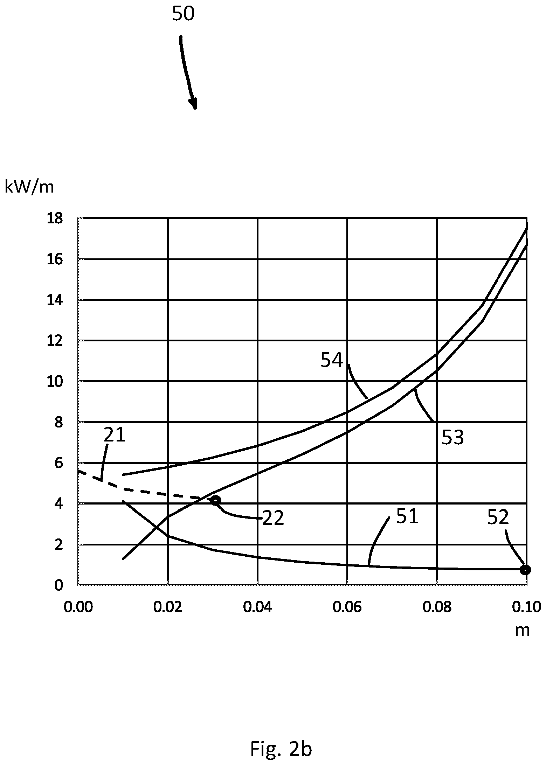

Im Ganzen wird durch die Rekuperation der aus der Isolation abgeführten Wärme der Wirkungsgrad der Prozesseinheit nicht oder nur wenig verringert[PG3], die thermische Trägheit aber verbessert, was den Gesamtwirkungsgrad der Prozesseinheit erhöht. Bei einer Anordnung gemäss den Figuren 3a und 3b ist es sogar so, dass sich neben der gewünschten Senkung der thermischen Trägheit der Wirkungsgrad der Prozesseinheit erheblich erhöht: das Diagramm von Figur 2b zeigt über die Kurve 51 den Wärmeverlust durch die erfindungsgemässe Isolation, der tiefer ist als bei dem durch die Kurve 21 gezeigten Wärmeverlust bei einer konventionellen Isolation. S. dazu die Beschreibung zu den Figuren 2b bis 3b unten.

Es ergibt sich ein Verfahren zur Isolation einer Prozesseinheit, die mit einem isolierenden Bereich zur Eindämmung eines Wärmestroms von einer warmen Seite zu einer kalten Seite des isolierenden Bereichs versehen ist, wobei der isolierende Bereich an einem Ort mit einer Temperatur, die tiefer ist als diejenige der warmen Seite, gekühlt, die durch ein Kühlmedium aufgenommene Wärme aus dem isolierenden Bereich abtransportiert und als rekuperierte Wärme des laufenden Betriebs einem Verbraucher von Wärme wieder zugeführt wird. Eine Prozesseinheit mit einem isolierenden Bereich zur Ausführung dieses Verfahrens weist eine Kühlanordnung auf, die derart ausgebildet ist, dass sie im Normalbetrieb der Prozesseinheit Wärme aus dem isolierenden Bereich abführt.

Es sei an dieser Stelle angemerkt, dass die erfindungsgemässe Isolierung sich von einem etwaigen Notkühlsystem unterscheidet, z.B. dadurch, dass sie Wärme aus dem isolierenden Bereich abführt, die im Normalbetrieb laufend anfällt.

In der Erfindung ist der isolierende Bereich mehrschichtig ausgebildet, wobei zwei aneinandergrenzende Schichten vorgesehen werden, von denen die stromaufwärts des Wärmestroms gelegene einen höheren und die stromabwärts des Wärmestroms gelegene einen tieferen Wärmeleitkoeffizienten aufweist, und wobei das Kühlmedium zwischen diesen Schichten Wärme aufnimmt und abführt. Mit anderen Worten wird bevorzugt der isolierende Bereich wenigstens teilweise mehrschichtig ausgebildet, wobei zwei aneinandergrenzende Schichten vorgesehen sind, von denen die stromaufwärts des Wärmestroms gelegene eine höhere maximale Betriebstemperatur und die stromabwärts des Wärmestroms gelegene eine tiefere maximale Betriebstemperatur besitzt, und wobei das Kühlmedium zwischen diesen Schichten Wärme aufnimmt und abführt. Der Kühlkanal 44 stellt einen Wärmetauscher dar, der Wärme von der inneren isolierenden Schicht 42 aufnimmt und auf das Kühlmedium überträgt. Der Fachmann kann im konkreten Fall den Wärmetauscher geeignet ausbilden und eine andere Anordnung als den in der Figur 2a gezeigten Ringkanal vorsehen, z.B. ein ringförmiges Rohrbündel. In der Erfindung weist damit die Prozesseinheit eine Kühlanordnung auf, die mit einem betriebsfähig zwischen den aufeinanderfolgenden Schichten angeordneten Wärmetauscher versehen ist, derart, dass dieser im Betrieb Wärme aus der Übergangszone zwischen den Schichten aufnimmt. Weiter bevorzugt ist die Kühlanordnung derart ausgebildet, dass im Betrieb die im Wärmestrom stromabwärts neben ihr angeordnete Schicht (43,84) ihre Betriebstemperatur aufweist.

Ein aus Rohren gebildeter Kühlkanal weist den Vorteil auf, dass bei entsprechend angepasster Strömungsgeschwindigkeit des Kühlmediums sich in den Rohren eine im Wesentlichen laminare Strömung ausbildet, was wiederum zu einer konvektiven Kühlung der anliegenden Isolationsschichten und einem Wärmeübergangskoeffizienten des Kühlkanals führt, der entsprechend unabhängig ist von der Strömungsgeschwindigkeit des Kühlmediums (solange die laminare Strömung aufrechterhalten bzw. die Strömungsgeschwindigkeit nicht eine diesbezügliche Grenze überschreitet). In Fall eines absorptiven Gases (s. dazu die Beschreibung unten) liegt ein von der Strömungsgeschwindigkeit unabhängiger Wärmeübergangskoeffizient auch ohne laminare Strömung vor, wenn das Verhältnis der vom Kühlmedium im Kühlkanal durch Absorption aufgenommenen Wärme gegenüber der gesamten im Kühlkanal aufgenommenen Wärme durch Absorption und Konvektion gleich oder grösser ist als 0,5 oder bevorzugt gleich oder grösser ist als 0,7, besonders bevorzugt gleich oder grösser als 0,8.

Damit wird eine vereinfachte Regelung der Kühlung während dem Betrieb ermöglicht.

- zeigt ein Diagramm 50 im Hinblick auf die thermischen Verhältnisse in einer erfindungsgemäss isolierten Prozesseinheit, die als Receiver gemäss Figur 2a ausgebildet ist.

Auf der vertikalen Achse ist der Wärmestrom in kW/m aufgetragen, auf der horizontalen Achse die Dicke einer äusseren Schicht 43 (Figur 2a) hier aus Microtherm 1000R. Vorausgesetzt ist eine breite des Kühlkanals 44 (Figur 2a) von 20 mm und ein Kühlmedium aus Wasserdampf bei 800 K.

Im Diagramm 50 ist die Kurve 21 aus Fig 1c eingetragen, welche den Wärmestrom aus dem isolierten Bereich 17 hinaus, mit anderen Worten, den Wärmeverlust bei einer konventionellen Isolation zeigt. Der Punkt 22 zeigt, wie oben erwähnt, die dann maximal mögliche Dicke der äusseren Schicht 18 aus Microtherm 1000R.

Zum Vergleich zeigt die Kurve 51 den Wärmeverlust an der Aussenseite der äusseren Schicht 43 aus Microtherm 1000R. Der minimale Wärmeverlust mit der erfindungsgemässen Isolation ist aus dem Punkt 52 ersichtlich und beträgt ca. 10% des Wärmeverlusts der konventionellen Isolation, s. den Punkt 22.

Die Kurve 53 zeigt die vom Kühlmedium im Kanal 44 aufgenommene Wärme - die nicht verloren ist, sondern einem Verbraucher zugeführt wird, s. dazu auch die Beschreibung zu Figur 3.

Die Kurve 54 zeigt den Wärmestrom durch die innere Isolationsschicht 42.

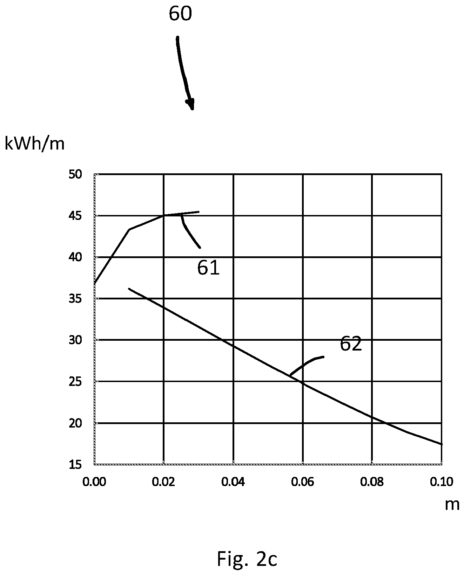

Figur 2c zeigt ein Diagramm 60, wobei auf der vertikalen Achse die thermische Trägheit, d.h. die notwendige Wärmemenge in kWh/m zur Erwärmung der Isolation aufgetragen ist, und auf der horizontalen Achse wiederum die Dicke der äusseren Schicht 43 (Figur 2a).

Die Kurve 61 zeigt die für die Erwärmung auf Betriebstemperatur nötige Energie im Fall der konventionellen Isolation gemäss Figur 1b, die Kurve 62 diejenige im Fall einer erfindungsgemässen Isolation gemäss Figur 2a, die relevant kleiner ausfällt.

Figur 3a zeigt schematisch eine als Receiver 70 ausgebildete Prozesseinheit, wie sie in einem Solarturmkraftwerk gemäss Figur 1a verwendet und gemäss Figur 3b eingesetzt werden kann, um die aus der erfindungsgemäss ausgebildeten Isolation stammende Wärme zu rekuperieren.

Der Receiver 70 weist einen Erwärmungsbereich 71, mit einer optische Öffnung 72, beispielsweise ein Quarzfenster, und einen Absorber 73 auf, wobei zwischen dem Quarzfenster 72 und dem Absorber 73 ein Absorptionsraum 74 vorgesehen ist, der von dem Wärme transportierenden Medium den eingezeichneten Pfeilen entsprechend von rechts nach links, d.h. gegen den Absorber 73 hin, durchströmt wird. Dazu weist die Transporteinrichtung 75 um das Quarzfenster 72 herum angeordnete (mit der Leitung 8 verbundene, s. Fig 1a) Einlassstutzen 76 für Wärme transportierendes Medium mit der Temperatur Tᵢₙ auf, die in den Absorptionsraum 74 führen, und einen zentralen, hinter dem Absorber 73 angeordneten Auslassstutzen 77 für Wärme transportierendes Medium mit der Temperatur Tₒ (der in die Leitung 6 mündet, s. Figur 1a).

Der Absorber 73 kann auch als Reaktorelement ausgebildet sein, durch welches die dargestellte Anordnung von einem Receiver zu einem Receiver-Reaktor wird, d.h. einer Anordnung, in welcher konzentrierte Sonnenstrahlung beispielsweise aus einem Solar-Turmkraftwerk verwendet wird, um eine chemische Reaktion ablaufen zu lassen, hier bevorzugt die Produktion von Syngas.

Dazu weist der als Reaktor ausgebildete Absorber 73 dann beispielsweise ein reduzierbares und oxidierbares Material für einen Reduktions- und einen Oxidationsprozess auf, bevorzugt CeO₂, das bei erhöhter Temperatur reduziert bzw. in Anwesenheit eines oxidierenden Gases oxidiert werden kann. Andere Materialien kann der Fachmann für den konkreten Fall festlegen, so beispielsweise Ceriumdioxid (CeOz), dotiertes CeO₂, oder Perovskite.

Weiter ist der Absorber 73 als Schwarzkörper-Strahlungsanordnung ausgebildet, d.h. er besitzt eine im Pfad der einfallenden Sonnenstrahlung 78 angeordnete, diese Strahlung absorbierende Oberfläche 73', die derart ausgebildet ist, dass der Absorber 73 sich auf Grund der auf seine Oberfläche 73' einfallenden Sonnenstrahlung 78 betriebsfähig erhitzt und dann über seine Oberfläche 73' entsprechende Schwarzkörperstrahlung 3' (im Wesentlichen Infrarotstrahlung) in den Absorptionsraum 74 abgibt. Der Begriff Schwarzkörperstrahlung wird hier verwendet, um die auf Grund seiner Temperatur vom Absorber 73 abgegebene eigene Strahlung zu bezeichnen, im Gegensatz etwa zu von ihm reflektiertem Sonnenlicht 78. Die Temperatur des Absorbers 73 ist durch die Absorption des Sonnenlichts 78 stark erhöht und kann in einem Bereich von beispielsweise 1000 K bis über 2000 K liegen, je nach der Auslegung des Receivers 73 im konkreten Fall, und je nach den verwendeten Materialien. Prinzipbedingt ist aber der Betriebstemperaturbereich des Receivers nach oben nicht begrenzt, sondern hängt von den gewünschten Temperaturen und den verfügbaren Materialien ab.

Damit gibt der Absorber 73 seine Wärmeleistung in Form von Schwarzkörperstrahlung (Infrarotstrahlung) in den Absorberraum 74 ab, soweit diese nicht im Fall eines Receiver-Reaktors für eine endotherme Reaktion der Reduktion und der Bildung von Syngas während der Oxidation konsumiert wird. Die entsprechend benötigte Energie wird durch die Sonnenstrahlung 78 zugeführt.

Weiter wird als Wärme transportierendes Medium ein Infrarotstrahlung-absorbierendes Gas oder Gasgemisch verwendet, welches die Schwarzkörperstrahlung des Absorbers 73 während seiner Verweilzeit im Erwärmungsbereich 71 absorbiert und sich im Hinblick auf Tₒᵤₜ entsprechend erhitzt. Als infrarot absorbierendes Gas kann ein heteropolares Gas, bevorzugt eines oder ein Gemisch der Gase CO₂, Wasserdampf, CH₄, NH₃, CO, SO₂, SO₃, HCl, NO, und NO₂ verwendet werden.

Bei der Verwendung solcher Gase ergibt sich letztlich ein durch den erfindungsgemässen Receiver-Reaktor nutzbarer bzw. genutzter Treibhauseffekt, da diese Gase für das sichtbare Licht hoch durchsichtig sind, das damit den Absorber im Wesentlichen erreicht, aber für die Infrarotstrahlung des Absorbers wenig bis kaum durchsichtig sind, so dass sie sich also vor dem Absorber absorptiv auf Tₒᵤₜ erwärmen. Es sei hier angemerkt, dass reale Gase sichtbares Licht oder Infrarotstrahlung nicht gleichmässig über alle Frequenzen absorbieren oder für diese durchsichtig sind, sondern vor allem in für ein jeweiliges Gas spezifischen Frequenzbändern unterschiedlich stark. Zusätzlich fällt die Absorption mit dem Abstand von der Strahlungsquelle ab. Dadurch wird oben im Hinblick auf die Absorption bzw. Durchsichtigkeit von Strahlung von "hoch durchsichtig" bzw. von "wenig bis kaum durchsichtig" gesprochen.

Ein bestimmender Parameter ist damit die Absorptivität *α* des Wärme transportierenden Gases, die durch Versuche gemessen, aus Spektrallinienwerten von molekülspektroskopischen Datenbanken (z.B. HITEMP2010) berechnet, oder auch näherungsweise aus Emissivitätsdiagrammen nach der Regel von Hottel bestimmt werden kann.

Es sei an dieser Stelle angemerkt, dass natürlich das Sonnenlicht neben dem sichtbaren Licht, das keine infrarote Frequenzen aufweist, auch solche infraroten Frequenzen besitzt. Diese werden dann erfindungsgemäss direkt durch das Wärme transportierende Fluid im Absorptionsraum absorbiert, deren Energie also im Wesentlichen ohne Verluste genutzt, da die Rückstrahlung durch das nachströmende Fluid wiederum absorbiert wird.

Schliesslich wird neben der Verwendung eines infrarot absorbierenden Gases oder Gasgemischs der Absorbtionsraum 71 derart ausgebildet und der Massenstrom des Wärme transportierenden Mediums derart festgelegt, dass bevorzugt im Wesentlichen die gesamte Schwarzkörperstrahlung des Absorbers 73 vom Wärme transportierenden Medium absorbiert, d.h. dass die Rückstrahlung des Absorbers 14 durch die Öffnung 72 weitgehend durch das Gas absorbiert wird.

Bei der Rückstrahlung des Absorbers 73 handelt es sich um seine Schwarzkörperstrahlung, welche auf einem durch die Öffnung 72 verlaufenden Pfad liegt und damit - wenn nicht absorbiert - in die Umgebung abgestrahlt wird und so den Wirkungsgrad des Receiver-Reaktors herabsetzt. Durch den dargestellten Receiver wird nun in Kombination mit dem als Reaktor ausgebildeten Absorber eine spezielle Zone, der Absorptionsraum 71, geschaffen um diese Wirkungsgradverluste im Rahmen der für einen Receiver oder Receiver-Reaktor überhaupt möglichen Geometrie zu beseitigen. Der durch die Öffnung verlaufende Pfad muss nicht auf einer Geraden liegen, sondern umfasst auch von den Wänden des Absorptionsraums reflektierte Schwarzkörperstrahlung des Absorbers 73.

Eine derart absorbierte Rückstrahlung des Absorbers 73 setzt voraus, dass einerseits der Absorptionsraum 71 lang genug ist, und andererseits, dass der Massenstrom des Wärme transportierenden Fluids genügt, um im Absorptionsraum 71 ein Temperaturprofil derart aufrecht zu erhalten, dass die Temperatur am Ort der Öffnung nur unwesentlich über Tᵢₙ liegt, was beispielsweise bei einem Stillstand des Wärme transportierenden Fluids nach einer Zeitspanne nicht mehr der Fall wäre. Solch ein Receiver kann eine Höhe und einen Durchmesser von je von 15,95 m aufweisen und ist dann geeignet, die Sonnenstrahlung eines Felds von Heliostaten gemäss Figur 1a aufzunehmen, wobei das Wärme transportierende Fluid im Wesentlichen über Absorption erhitzt wird.

Aus dieser Verwendung eines infrarot absorbierenden Gases ergeben sich drei Vorteile: Erstens werden erfindungsgemäss Strahlungsverluste durch Rückstrahlung der Schwarzkörperstrahlung aus der optischen Öffnung hinaus überwiegend oder im Wesentlichen vollständig vermieden. Diese Rückstrahlung vermindert den Wirkungsgrad eines konventionellen Receivers (und damit eines Receiver-Reaktors) spürbar.

Zweitens wird die Wärme der Schwarzkörperstrahlung des Absorbers direkt im Wärme transportierenden Fluid nutzbar und steht für eine flexible Nutzung bereit, s. dazu auch die Beschreibung unten.

Drittens muss für die Erwärmung des Wärme transportierenden Mediums auf Tₒᵤₜ weder ein konstruktiver Aufwand getrieben, noch entsprechende Strömungsverluste in Kauf genommen werden, wie dies bei konventionellen, überwiegend über die Konvektion arbeitenden Receivern der Fall ist. Die diesbezüglichen Probleme bei volumetrischen Receivern mit räumlich ausgebildeten Absorbern komplizierter Struktur (Konstruktionsaufwand, Strömungsverluste) entfallen. Dies gilt insbesondere im Hinblick auf den Absorptionsraum, da für möglichst intensive Schwarzkörper-Strahlung in den Absorptionsraum hohe Temperaturen des Absorbers, aber auch der Seitenwände des Absorptionsraums vorteilhaft sind, so dass dort Kühlmittel aller Art entfallen, insbesondere Kühlkanäle, wie dies bei Receivern gemäss dem Stand der Technik vorgesehen ist - entweder Kühlkanäle in den Wänden, oder auch die maximale Konvektion sicherstellenden Kühlkanäle im Absorber Länge und Durchmesser der Absorptionskammer 74 betragen je 15,96 m. Damit ist eine genügende Länge der Absorptionskammer für die nahezu vollständige Absorption der Schwarzköprerstrahlung des Absorbers vorhanden,. Der Absorber kann dann beispielsweise als einfache Platte ausgebildet werden, so dass der Receiver-Reaktor als konstruktive lowcost Lösung einfach hergestellt werden kann. Dann weist bevorzugt die in den Absorptionsraum strahlende Oberfläche des Absorbers ein reduzierbares/oxidierbares Material auf.

Der Durchmesser der optischen Öffnung 72 beträgt 11,28 m, die damit geeignet ist, die Strahlung des Felds der Heliostaten 2 (Figur 1a) aufzunehmen, jedoch mit einer Fläche von 100 m² nur halb so gross ist wie der Absorber 14 mit 200 m², so dass auch die Rückstrahlung des Wärme transportierenden Fluids mit der Temperatur Tᵢₙ entsprechend reduziert ist.

Der Absorber 73 besteht aus CeO₂, das Gewicht des Receivers-Reaktors ist 144 t. Der Strahlungsfluss durch die optischen Öffnung 72 beträgt 1'200kW/m² und an der absorbierenden Oberfläche 14' 600 kW/m² (welche gegenüber der Öffnung 72 die doppelte Fläche aufweist.

Als Wärme transportierendes und Infrarot-absorbierendes Fluid wird Wasserdampf verwendet, wobei dessen Temperatur Tᵢₙ 1000 K beträgt. Diese Temperatur ist beispielhaft für einen dem Receiver-Reaktor zugeordneten industriellen Prozess, der bei beispielsweise 900 K abläuft, s. den Verbraucher 7 von Figur 1a. Die Temperatur Tₒᵤₜ des Wasserdampfs am Absorber beträgt 1800 K, was beispielsweise auch für die Herstellung von Syngas genügt.

Figur 3b zeigt schematisch einen Ausschnitt aus einem Solar-Turmkraftwerk 1 (Fig. 1a) mit einem Receiver 80, der erfindungsgemäss isoliert ist, also eine isolierende Schicht 81 mit einem Kühlkanal 82 aufweist, der wiederum zwischen einer inneren Hochtemperaturisolationsschicht 83 und einer äusseren Hochleistungsisolationsschicht 84 liegt. Diese Anordnung entspricht derjenigen von Figur 2a. Eine Transportanordnung für das Wärme transportierenden Fluid, hier über die Leitung 6 für erwärmtes Wärme transportierendes Fluid, den Verbraucher 7 und die Leitung 8 für kaltes Wärme transportierendes Fluid entspricht generell der Anordnung gemäss Fig. 1a.

Der Kühlkanal 82 besitzt stromaufwärts einen Einlassstutzen 85 und stromabwärts einen Auslassstutzen 86. Als Kühlmittel wird vorliegend das Wärme transportierende Fluid eingesetzt, wobei kaltes Wärme transportierendes Fluid über die Leitung 87 in den Einlassstutzen einströmt, durch die Isolation der Länge des Erwärmungsbereichs 71 des Receivers entlang hindurch, wo es sich erwärmt, bis zum Auslassstutzen 86, wo es in eine Leitung 88 gelangt, die wiederum über einen im Reciever 80 vorgesehenen Einlass 88 in dessen Absorptionsraum 74 mündet.

Das von der optischen Öffnung 72 des Receivers 80 gegen den Absorber 73 strömende, kalte Wärme transportierende Fluid erwärmt sich absorptiv laufend von Tᵢₙ bei der optischen Öffnung 72 bis Tₒ, am Ort des Absorbers 73, s. die Beschreibung zu Figur 1a und 3a. Entsprechend gibt es im Erwärmungsbereich 71 einen Ort, wo die Temperatur des durchströmenden, sich laufend erwärmenden Fluids der Temperatur des aus dem Auslassstutzen 86 entnommenen Fluids entspricht. An diesem Ort ist der Einlass 88 vorgesehen. Der Fachmann kann im konkreten Fall für verschiedene Betriebslast des Receivers 80 mehrere Einlässe vorsehen. Alternativ kann natürlich auch ein separater Kühlkreislauf für die Isolation vorgesehen werden, der einen eigenen Verbraucher aufweist.

Es ergibt sich ein Verfahren, bei welchem bevorzugt als Kühlmedium ein durch den Receiver zu erwärmendes, Wärme transportierendes Fluid verwendet wird, das bevorzugt nach der Erwärmung im isolierenden Bereich in den Receiver geführt wird. Dazu sieht eine erfindungsgemässe Anordnung bevorzugt dass der Receiver eine Transportanordnung für ein Wärme transportierendes Fluid aufweist, die derart ausgebildet ist, dass im Betrieb des Receivers das Wärme transportierende Fluid durch diesen erwärmt wird, und wobei die Transportanordnung weiter derart ausgebildet ist, dass sie kaltes Wärme transportierendes Fluid durch die Kühleinheit transportiert und in den Receiver führt.

Im Ergebnis kann durch eine Anordnung wie sie beispielhaft in Figur 3b gezeigt wird, der Wärmeverlust gegenüber einer konventionellen Isolation erheblich gesenkt werden, s. im Diagramm 50 von Figur 2b den Punkt 52 gegenüber dem Punkt 22, da gleichzeitig die der Isolation entnommene Wärme rekuperiert wird, was im Fall der in Figur 3b gezeigten Anordnung im Wesentlichen vollständig gelingt. Ausserdem wird zusätzlich die thermische Trägheit erheblich vermindert, was ebenfalls den Wirkungsgrad der erfindungsgemäss isolierten Anordnung erhöht.

Dazu wird die die Prozesseinheit bevorzugt als Receiver ausgebildet wird, dessen Betriebstemperatur gleich oder höher ist als 1000 K, bevorzugt 1500 K, besonders bevorzugt 1800 K, ganz bevorzugt 2000 K. Allerdings kann, wie oben erwähnt, die Prozesseinheit anders ausgebildet sein, beispielsweise als Hochtemperaturleitung, deren Betriebstemperatur gleich oder höher ist als 1000 K, bevorzugt 1500 K, besonders bevorzugt 1800 K, ganz bevorzugt 2000 K, und die weiter bevorzugt eine Leitung ist für ein durch einen Receiver erwärmtes, Wärme transportierendes Fluid.

Figur 3c zeigt schematisch einen Ausschnitt eine Ausführungsform in der Art derjenigen von Figur 3b, wobei jedoch die Führung der Leitung 8 für das Wärme transportierende Fluid geändert ist. Die Leitung 8 mündet direkt in den Einlassstutzen 85, und der Kühlkanal 82 in den Absorptionsraum 74. Das Wärme transportierende Fluid erwärmt sich auf Grund seines grossen Massenstroms in der Isolation nur wenig, erwärmt sich also nur unwesentlich über Tᵢₙ, womit die theoretisch etwas vergrösserte Rückstrahlung durch die optische Öffnung 72 für den Wirkungsgrad nicht ins Gewicht fällt.

## Patentansprüche

1. Verfahren zur Isolation einer Prozesseinheit, die mit einem isolierenden Bereich (17,41) zur Eindämmung eines Wärmestroms von einer warmen Seite zu einer kalten Seite des isolierenden Bereichs (17,41) versehen ist, wobei der isolierende Bereich an einem Ort mit einer Temperatur, die tiefer ist als diejenige der warmen Seite, gekühlt wird, die durch ein Kühlmedium aufgenommene Wärme aus dem isolierenden Bereich abtransportiert und als rekuperierte Wärme des laufenden Betriebs einem Verbraucher von Wärme wieder zugeführt wird, und wobei der isolierende Bereich (17,41) mehrschichtig ausgebildet wird, und zwei aneinandergrenzende Schichten (18,19,42,43) vorgesehen werden, **dadurch gekennzeichnet, dass** von den Schichten die stromaufwärts des Wärmestroms gelegene einen höheren und die stromabwärts des Wärmestroms gelegene einen tieferen Wärmeleitkoeffizienten λ aufweist, und wobei das Kühlmedium zwischen diesen Schichten (18,19,42,43) Wärme aufnimmt und abführt.

2. Verfahren nach Anspruch 1, wobei von den Schichten die stromaufwärts des Wärmestroms gelegene eine höhere maximale Betriebstemperatur und die stromabwärts des Wärmestroms gelegene eine tiefere maximale Betriebstemperatur besitzt.

3. Verfahren nach Anspruch 1, wobei die Prozesseinheit als Receiver (70,80) ausgebildet wird, dessen Betriebstemperatur gleich oder höher ist als 1000 K, bevorzugt 1500 K, besonders bevorzugt 1800 K, ganz bevorzugt 2000 K.

4. Verfahren nach Anspruch 1, wobei die Prozesseinheit als Hochtemperaturleitung ausgebildet wird, deren Betriebstemperatur gleich oder höher ist als 1000 K, bevorzugt 1500 K, besonders bevorzugt 1800 K, ganz bevorzugt 2000 K, und bevorzugt als Leitung für ein durch einen Receiver (70,80) erwärmtes, Wärme transportierendes Fluid.

5. Verfahren nach Anspruch 1, wobei als Kühlmedium ein Infrarotstrahlung absorbierendes heteropolares Gas, bevorzugt eines oder ein Gemisch der Gase CO2, Wasserdampf, CH4, NH3, CO, SO2, SO3, HCl, NO, und NO2, verwendet wird.

6. Verfahren nach Anspruch 5, wobei ein Gemisch mit Wasserdampf und CO2 verwendet wird.

7. Verfahren nach Anspruch 1, wobei das Verhältnis der vom Kühlmedium in einem Kühlkanal durch Absorption aufgenommenen Wärme gegenüber der gesamten im Kühlkanal aufgenommenen Wärme durch Absorption und Konvektion gleich oder grösser ist als 0,5 oder bevorzugt gleich oder grösser ist als 0,7, besonders bevorzugt gleich oder grösser als 0,8.

8. Verfahren nach Anspruch 1, wobei als Kühlmedium ein durch den Receiver (70,80) zu erwärmendes, Wärme transportierendes Fluid verwendet wird, das bevorzugt nach der Erwärmung im isolierenden Bereich (17,41) in den Receiver (70,80) geführt wird.

9. Prozesseinheit mit einem isolierenden Bereich (17,41) zur Ausführung des Verfahrens nach Anspruch 1, wobei sie eine Kühlanordnung aufweist, die derart ausgebildet ist, dass sie im Normalbetrieb der Prozesseinheit Wärme aus dem isolierenden Bereich (17,41) abführt, und wobei der isolierende Bereich (17,41) mehrschichtig aufgebaut ist und in wenigstens zwei in Richtung des im Normalbetrieb vorgesehenen Wärmestroms aufeinanderfolgenden Schichten (42,43,83,84) ein isolierendes Material mit einem verschiedenen Wärmeleitkoeffizienten λ aufweist, **dadurch gekennzeichnet, dass** die im Wärmestrom stromaufwärts angeordnete Schicht den höheren Wärmeleitkoeffizienten λ aufweist und wobei die Kühlanordnung mit einem betriebsfähig zwischen den aufeinanderfolgenden Schichten (42,43,83,84) angeordneten Wärmetauscher versehen ist, derart, dass dieser im Betrieb Wärme aus der Übergangszone zwischen den Schichten aufnimmt.

10. Prozesseinheit nach Anspruch 9, wobei die wenigstens zwei in Richtung des im Normalbetrieb vorgesehenen Wärmestroms aufeinanderfolgenden Schichten (42,43,83,84) das isolierende Material mit einer verschiedenen maximalen Betriebstemperatur aufweisen, wobei die im Wärmestrom stromaufwärts angeordnete Schicht (42,83) die höhere Betriebstemperatur besitzt.

11. Prozesseinheit nach Anspruch 9, wobei die Kühlanordnung derart ausgebildet ist, dass im Betrieb die im Wärmestrom stromabwärts neben ihr angeordnete Schicht (43,84) ihre Betriebstemperatur aufweist.

12. Prozesseinheit nach Anspruch 9, wobei diese als Receiver (70,80) ausgebildet ist.

13. Prozesseinheit nach Anspruch 12, wobei der Receiver (70,80) eine Transportanordnung für ein Wärme transportierendes Fluid aufweist, die derart ausgebildet ist, dass im Betrieb des Receivers (70,80) das Wärme transportierende Fluid durch diesen erwärmt wird, und wobei die Transportanordnung weiter derart ausgebildet ist, dass sie kaltes Wärme transportierendes Fluid durch die Kühleinheit transportiert und in den Receiver (70,80) führt.

14. Prozesseinheit nach Anspruch 9, wobei diese für eine Betriebstemperatur von 1000 K oder mehr, bevorzugt 1500 K oder mehr, besonders bevorzugt 1800 K oder mehr, ganz bevorzugt 2000 K mehr ausgebildet ist.

15. Prozesseinheit nach Anspruch 9, wobei diese als Leitung für ein warmes Medium mit einer Betriebstemperatur von 1000 K oder mehr, bevorzugt 1500 K oder mehr, besonders bevorzugt 1800 K oder mehr, ganz bevorzugt 2000 K mehr ausgebildet ist.

## Claims

1. A method of insulating a process unit provided with an insulating portion (17,41) for containing a heat flow from a hot side to a cold side of the insulating portion (17,41), wherein the insulating portion is cooled at a location having a temperature lower than that of the hot side, the heat absorbed by a cooling medium is removed from the insulating portion and is supplied as recuperated heat of current operation to a consumer of heat, and wherein the insulating region (17,41) is formed in multiple layers, and two adjacent layers (18, 19, 42, 43) are provided, **characterized in that** of the layers the one located upstream of the heat flow has a higher and the one located downstream of the heat flow has a lower thermal conductivity coefficient λ, and wherein the cooling medium between these layers (18, 19, 42, 43) absorbs and dissipates heat.

2. The method of claim 1, wherein, of the layers, the one upstream of the heat flow has a higher maximum operating temperature and the one downstream of the heat flow has a lower maximum operating temperature.

3. The method according to claim 1, wherein the process unit is formed as a receiver (70,80) whose operating temperature is equal to or higher than 1000 K, preferably 1500 K, particularly preferably 1800 K, most preferably 2000 K.

4. The method according to claim 1, wherein the process unit is designed as a high-temperature line, the operating temperature of which is equal to or higher than 1000 K, preferably 1500 K, more preferably 1800 K, most preferably 2000 K, and preferably as a line for a heat-transporting fluid heated by a receiver (70,80).

5. The method according to claim 1, wherein as cooling medium an infrared radiation absorbing heteropolar gas, preferably one or a mixture of the gases CO2, water vapor, CH4, NH3, CO, SO2, SO3, HCl, NO, and NO2, is used.

6. The method of claim 5, wherein a mixture comprising water vapor and CO2 is used.

7. The method according to claim 1, wherein the ratio of the heat absorbed by the cooling medium in a cooling channel by absorption to the total heat absorbed in the cooling channel by absorption and convection is equal to or greater than 0.5, or is preferably equal to or greater than 0.7, and is particularly preferably equal to or greater than 0.8.

8. The method according to claim 1, wherein a heat-transporting fluid to be heated by the receiver (70, 80) is used as the cooling medium, which is preferably guided into the receiver (70, 80) after heating in the insulating region (17, 41).

9. Process unit having an insulating region (17, 41) for carrying out the method according to claim 1, wherein it has a cooling arrangement which is designed in such a way that it removes heat from the insulating region (17, 41) during normal operation of the process unit, and wherein the insulating region (17, 41) has a multilayer structure and, in at least two layers (42, 43, 83, 84) having an insulating material with a different thermal conductivity coefficient λ, **characterized in that** the layer upstream in the heat flow has the higher thermal conductivity coefficient λ and wherein the cooling arrangement is provided with a heat exchanger operably arranged between the successive layers (42,43,83,84) in such a way that it absorbs heat from the transition zone between the layers during operation.

10. The process unit according to claim 9, wherein the at least two successive layers (42,43,83,84) in the direction of the heat flow provided in the normal operation comprise the iso-lating material having a different maximum operating temperature, wherein the layer (42,83) arranged upstream in the heat flow has the higher operating temperature.

11. The process unit of claim 9, wherein the cooling arrangement is such that, in operation, the layer (43,84) located downstream adjacent thereto in the heat flow has its operating temperature.

12. The process unit according to claim 9, wherein the same is formed as a receiver (70,80).

13. The process unit of claim 12, wherein the receiver (70,80) comprises a heat transporting fluid transport arrangement configured to heat the heat transporting fluid through the receiver (70,80) during operation of the receiver (70,80), and wherein the transport arrangement is further configured to transport cold heat transporting fluid through the cooling unit and into the receiver (70,80).

14. The process unit according to claim 9, wherein said process unit is designed for an operating temperature of 1000 K or more, preferably 1500 K or more, more preferably 1800 K or more, most preferably 2000 K more.

15. The process unit according to claim 9, wherein this is designed as a conduit for a warm medium with an operating temperature of 1000 K or more, preferably 1500 K or more, particularly preferably 1800 K or more, most preferably 2000 K more.

## Revendications

1. Procédé d'isolation d'une unité de traitement munie d'une zone isolante (17, 41) pour contenir un flux de chaleur d'un côté chaud vers un côté froid de la zone isolante (17, 41), dans lequel la zone isolante est refroidie à un endroit où la température est inférieure à celle du côté chaud, la chaleur absorbée par un milieu de refroidissement est évacuée de la zone isolante et renvoyée à un consommateur de chaleur en tant que chaleur récupérée du fonctionnement en cours, et dans lequel la zone isolante (17, 41) est formée de plusieurs couches et deux couches adjacentes (18, 19, 42, 43) sont prévues, **caractérisé en ce que** parmi les couches, celle située en amont du flux de chaleur présente un coefficient de conductivité thermique λ plus élevé et celle située en aval du flux de chaleur présente un coefficient de conductivité thermique λ plus bas, et dans lequel le fluide de refroidissement absorbe et évacue la chaleur entre ces couches (18, 19, 42, 43).

2. Procédé selon la revendication 1, dans lequel, parmi les couches, celle située en amont du flux de chaleur a une température maximale de fonctionnement plus élevée et celle située en aval du flux de chaleur a une température maximale de fonctionnement plus basse.

3. Procédé selon la revendication 1, dans lequel l'unité de traitement est conçue comme un récepteur (70, 80) dont la température de fonctionnement est égale ou supérieure à 1000 K, de préférence 1500 K, de manière particulièrement préférée 1800 K, de manière tout à fait préférée 2000 K.

4. Procédé selon la revendication 1, dans lequel l'unité de traitement est conçue comme une conduite à haute température, dont la température de fonctionnement est égale ou supérieure à 1000 K, de préférence 1500 K, de manière particulièrement préférée 1800 K, de manière tout à fait préférée 2000 K, et de préférence comme une conduite pour un fluide transportant de la chaleur, chauffé par un récepteur (70, 80).

5. Procédé selon la revendication 1, dans lequel on utilise comme fluide de refroidissement un gaz hétéropolaire absorbant le rayonnement infrarouge, de préférence un gaz ou un mélange des gaz CO2, vapeur d'eau, CH4, NH3, CO, SO2, SO3, HCl, NO, et NO2.

6. Procédé selon la revendication 5, dans lequel on utilise un mélange avec de la vapeur d'eau et du CO2.

7. Procédé selon la revendication 1, dans lequel le rapport entre la chaleur absorbée par le fluide de refroidissement dans un canal de refroidissement et la chaleur totale absorbée par absorption et convection dans le canal de refroidissement est égal ou supérieur à 0,5 ou, de préférence, égal ou supérieur à 0,7, de manière particulièrement préférée égal ou supérieur à 0,8.

8. Procédé selon la revendication 1, dans lequel on utilise comme fluide de refroidissement un fluide transportant la chaleur et devant être chauffé par le récepteur (70, 80), qui est de préférence amené dans le récepteur (70, 80) après le chauffage dans la zone isolante (17, 41).

9. Unité de traitement avec une zone isolante (17, 41) pour la mise en oeuvre du procédé selon la revendication 1, dans laquelle elle présente un dispositif de refroidissement qui est conçu de telle sorte qu'il évacue la chaleur de la zone isolante (17, 41) pendant le fonctionnement normal de l'unité de traitement, et dans laquelle la zone isolante (17, 41) est constituée de plusieurs couches et comporte au moins deux couches (42, 43, 83, 84) comprend un matériau isolant ayant un coefficient de conductivité thermique λ différent, **caractérisé en ce que** la couche en amont dans le flux de chaleur a le coefficient de conductivité thermique λ te plus élevé et dans lequel l'ensemble de refroidissement est muni d'un échangeur de chaleur disposé de manière opérationnelle entre les couches successives (42, 43, 83, 84) de telle sorte que, en fonctionnement, il absorbe la chaleur de la zone de transition entre les couches.

10. Unité de traitement selon la revendication 9, dans laquelle les au moins deux couches (42, 43, 83, 84) qui se succèdent dans la direction du flux de chaleur prévu dans le fonctionnement normal comprennent le matériau iso-lisant ayant une température de fonctionnement maximale différente, la couche (42, 83) située en amont dans le flux de chaleur ayant la température de fonctionnement la plus élevée.

11. Unité de traitement selon la revendication 9, dans laquelle l'agencement de refroidissement est conçu de telle sorte qu'en fonctionnement, la couche (43, 84) disposée à côté d'elle en aval dans le flux de chaleur présente sa température de fonctionnement.

12. Unité de traitement selon la revendication 9, cette unité étant conçue comme un récepteur (70, 80).

13. Unité de traitement selon la revendication 12, dans laquelle le récepteur (70, 80) présente un dispositif de transport pour un fluide transportant de la chaleur, qui est conçu de telle sorte que, lors du fonctionnement du récepteur (70, 80), le fluide transportant de la chaleur est chauffé par celui-ci, et dans laquelle le dispositif de transport est en outre conçu de telle sorte qu'il transporte du fluide transportant de la chaleur froid à travers l'unité de refroidissement et le conduit dans le récepteur (70, 80).

14. Unité de traitement selon la revendication 9, dans laquelle elle est conçue pour une température de fonctionnement de 1000 K ou plus, de préférence de 1500 K ou plus, de manière particulièrement préférée de 1800 K ou plus, de manière tout à fait préférée de 2000 K ou plus.

15. Unité de traitement selon la revendication 9, dans laquelle celle-ci est conçue comme conduite pour un fluide chaud avec une température de service de 1000 K ou plus, de préférence 1500 K ou plus, de manière particulièrement préférée 1800 K ou plus, de manière tout à fait préférée 2000 K ou plus.
